# EUROPEAN PATENT APPLICATION

(11) **EP 4 365 876 A1**
(43) Date of publication of application: **08.05.2024**
(21) Application number: 22205147.6
(22) Date of filing: 02.11.2022
(51) Int. Cl.: G09B 23/28

(54) **TRAINING DEVICE AND USE OF A TRAINING DEVICE**

(71) Applicant: Ferton Holding S.A., 2800 Delémont (CH)
(72) Inventor: Gatti, Simone, 1022 Chavannes-près-Renens (CH); Vandekerckhove, Olivier, 1299 Crans VD (CH)
(74) Representative: Müller Schupfner & Partner Patent- und Rechtsanwaltspartnerschaft mbB

(57) **Abstract**

A training device (1) to train a subgingival treatment of a tooth, comprising
- a treatment part (11) to model at least partially a region to be treated in the subgingival treatment
- a blocking part (12) to complicate an access to the treatment part (11),
wherein the treatment part (11) and the blocking part (12) are arranged such that they model at least an entrance region (ER) of a gum pocket, wherein the entrance region (ER) needs to be passed by a tool for the subgingival treatment in the subgingival treatment or to train the subgingival treatment.

## Description

The present invention concerns a training device and an use of a training device.

An accumulation of biofilm and calculus (dental plaque) is the cause of major dental diseases such as caries, periodontitis and periimplantitis. One of the most important areas, at which dental plaque accumulates is below the gumline cervical margins (subgingival). This area is the most difficult to clean because of the narrow access but it is important to remove the biofilm and calculus in this region to improve the course of dental diseases.

Moreover, when periodontitis or periimplantitis occur, a gingival pocket is formed below the gum with a depth between 4 to 10 mm, making it even more difficult to clean subgingivally. For this reason, it is important to periodically perform a professional teeth cleaning to check the presence of gingival pockets, effectively clean them and motivate the patient to improve their at-home dental hygiene.

In the context of professional dental cleaning, the removal subgingival plaque is usually done with the help of ultrasonic scaling and air polishing devices. To remove calculus, an ultrasonic device with a thin subgingival tip is used. This device has the advantage of having a good cleaning efficacy against the hard calculus. On the other hand, ultrasonic instruments cannot reach the most difficult locations. For this reason, air-polishing should be used to remove dental plaque subgingivally.

Due to the presence of sensitive tissue nearby, these procedures must be performed by well trained professionals to maximize the efficacy in the removal of calculus and dental plaque while minimizing the invasiveness and discomfort for the patient.

Considering the above, it is an object of the present invention to improve the training of practitioners to the use of ultrasonic scaling subgingival instruments and air polishing subgingival nozzles, to have a training tool that simulates both the soft tissue of gingiva, a deep pocket and a tooth model with both a dental plaque model and a calculus model.

This object is achieved by a training device according to claim 1 and by use of the training device according to claim 14. Preferred embodiments and additional features are incorporated in the dependent claims, the description and the figures.

According to a first aspect of the present invention a training device to train a subgingival treatment of a tooth, is provided, comprising
- a treatment part to model at least partially a region to be treated in the subgingival treatment and
- a blocking part to complicate an access to the treatment part,
wherein the treatment part and the blocking part are arranged such that they model at least an entrance region of a gum pocket, wherein the entrance region needs to be passed by a tool for the subgingival treatment in the subgingival treatment or to train the subgingival treatment.

Contrary to the prior art, the present invention suggests to use a training device to model a subgingival treatment. Thereby, the present invention addresses the challenges, which the operator experiences, when they perform the subgingival treatment. In particular, the entrance of the gum pocket is modeled such that the operator can train insertion of the tip of a scaler and/or an air polishing device, in particular its nozzle, inside the modeled gum pocket without contacting or even hurting the gum pocket and/or the teeth, especially teeth surrounding the treated part. This simulation is especially needed in such cases in which the subgingival treatment is performed by a scaler, which performs an ultrasonic oscillation and/or an air polishing device, which is inserted into the gum pocket, since the tools being inserted in the gum pockets need to perform a very precise movement and the operator feels and/or experiences the interaction of tool and teeth such that the operator has to counteract any movement of the tool being caused by the interaction with the tooth.

In particular, the device or the tool for performing the subgingival treatment is a scaler having a tool tip, in particular a straight extending tool tip, which performs an oscillating movement, wherein preferably the tool tip performs a flexural movement caused by the oscillation, which is experienced by the tool tip. Preferably, the flexural movement is performed in one or several planes. Thus, a complex movement of the tool tip has to be taken into account when the training is performed. The nozzle element being used for an air polishing device being especially used for the subgingival treatment, usually includes several supply lines and has therefore a certain size challenging the precise movement and arrangement inside the gum pocket being performed by the operator or trainee.

Preferably, it is provided that the blocking part is made from an elastic material. In particular, the elastic material is chosen such that the blocking part models the elasticity of the tissue of the gum pocket, especially of the part of the gum pocket being not the tooth. In other words: the blocking part forms the gum which limits the gum pocket. Due to the elasticity being modeled by the material of the blocking part, the trainee experiences the same interactions with the gum pocket as in a real subgingival treatment. Especially, it allows to slightly shift the top side of the gum pocket, especially of the gum of the gum pocket, to have an improved access to the treatment part, without damaging the blocking part.

Preferably, it is provided that the treatment part comprises a coating to model the surface properties of the tooth. As a result, it is possible to experience a realistic reaction of the scaler tip and/or the rejected powder air gas mixture being ejected onto the surface of the teeth. In particular it is provided that the treatment part is completely covered. Alternatively, it is also conceivable to cover less than 90%, preferably less than 80 % and most preferably less than 75 %. As a result it is possible to reduce amount of coating material necessary for coating. The coating is restricted in this case to those areas usually being involved in a subgingival treatment. Creating a completely covered treatment part simplifies the manufacturing, in particular the coating.

Further, it is preferable that the coating has a material thickness, wherein in particular the material thickness of the coating is in a range of 0.01 mm to 1 mm. The material thickness of the coating is preferably the material thickness in a direction normal to the outer surface coated with the coating. In particular, the decisive material thickness of the coating is the average material thickness of the coating. Should the material thickness be in a range between 0.01 mm to 1 mm, a good approximation of the material thickness of natural calculus on a human tooth can be achieved. Thus, realistic training conditions for the person to be trained can be provided, if the material thickness of the coating is in a range between 0.01 mm to 1 mm.

Preferably this coating is used to simulate calculus, which is naturally located on an outer surface or an outer contour of a human tooth. Thus, it is in general preferred that the coating is having the same or similar mechanical properties as natural calculus and/or wherein the coating is bonded to the outer surface of the main body similarly in comparison to the bonding between natural calculus and a human tooth. Preferably, the outer surface, at least in the region coated with the coating, has a hardness of at least 200 HV, preferably in a range between 250 HV and 600 HV. By designing the outer surface to have a hardness of at least 200 HV a feeling similar to the feeling, when removing calculus from a human tooth, can be realized.

Preferably, the coating is a ceramic coating or the coating contains ceramic material. By using a ceramic coating and/or a material containing ceramic material, a relatively light-weight coating can be achieved, thus, resulting in a training device easy to handle. Furthermore, due to the usage of ceramic material in the coating a good approximation of the hardness of natural calculus can be achieved. The ceramic material could for example be a ceramic material containing an oxide, such as zirconium oxide, and/or a ceramic material containing a silicate. In a preferred embodiment, at least 10% of the weight of the coating is made out of a ceramic material.

Preferably, the coating comprises plaster and/or a primer, especially a water-based primer, and/or wherein the coating consists of plaster and a primer, especially a water-based primer. The primer could for instance be a polymer dispersed in water usually applied to improve painting adhesion. By using plaster and/or a primer, the mechanical properties of natural calculus can be approximated relatively well. Furthermore, by using a primer and/or plaster, the coating adheres similarly to the outer surface of the main body as natural calculus does on human teeth. Thus, by using a coating comprising plaster and/or a primer, and/or consisting of plaster and a primer, a realistic training condition can be achieved. The usage of a water-based primer results in a cost effective coating. Furthermore, by using a water-based primer the environmental impact caused by the primer can be reduced and/or eliminated.

In a preferred embodiment, 40% to 95%, preferably 50% to 80%, of the weight of the coating is plaster and/or wherein 5% to 60%, preferably 20% to 50%, of the weight of the coating is a primer, especially a water-based primer. Should 40% to 95%, of the weight of the coating be plaster, the density of the coating is a good approximation of natural calculus. Should 50% to 80% of the weight of the coating be plaster, the hardness of the coating is comparable to the hardness of natural calculus. In case 5% to 60% of the weight of the coating is a primer, especially a water-based primer, the mechanical bonding between the coating and the outer surface of the main body is comparable to the mechanical bonding of natural calculus. Should 20% to 50% of the weight of the coating be made out of a primer, the strength of the coating is comparable to the strength of natural calculus. Thus, resulting in a realistic training scenario.

Preferably, at least that part of an outer surface, which is covered with the coating, has a constant curvature radius. Due to the fact that natural teeth of a human body are also curvedly shaped, a curved outer surface having a constant curvature radius is a good approximation of an outer surface of a natural tooth of a human, wherein at the same time an outer surface having a constant curvature radius can be manufactured in a cost efficient way. For example an outer surface having a constant curvature radius - at least in that part of the outer surface, which is coated with the coating - can be achieved by configuring the outer surface spherically, cylindrically and/or conically. Preferably, the curvature radius of the outer surface is constant in at least one plane perpendicular to the center axis.

Preferably, it is provided that the training device also comprises a basic body to at least partially model a tooth and/or jaw region. As a result, it is possible to include in the training device the usual environment of a treatment zone such that the trainee can also train the optimized orientation of the tool by considering the other tools or the jaw region, which should not be contacted by the powder air gas mixture and/or the tip of the scaler. Preferably, the basic body models a row of teeth, in particular molars.

In particular, the basic body comprises a gripping section and/or a fixing section. Such a gripping and/or fixing section allows to fix the training device in a defined position. For example the gripping section and/or fixing section is formed by a section having no modelled teeth, for allowing the trainee to fix the trainings device to a table during the training with one hand, while they position the tool relative to the training device with the other hand.

Preferably, it is provided that the basic body is made from a material being more rigid than the material of the blocking part. As a result, it is possible to give a realistic impression of the tissues, bones and teeth as being given in a real subgingival treatment. Furthermore, it is also conceivable that the basic body models the bones, the teeth and the gum next to the teeth, being not assigned to the treatment part. Preferably, the basic body is made from a plastic material and/or metal. The blocking part is made preferably by a plastic material, in particular a rubber material. It is also conceivable that the blocking part is made at least partially from a porous material.

Preferably, it is provided that in a region modelling the entrance region, a distance between the blocking part and the treatment part is adjustable. As a result, the size of the entrance region can be adapted such that the level of complexity of the treatment can be increased, for example. Thus, the training device can be used for different levels of experience of the operator or trainee. Preferably, it is provided that a distance is determined by a minimum size of an opening being realized by the arrangement of the treatment part and the blocking part. The opening forming the entrance region is preferably arranged in a plane being slanted. In particular, the opening is determined by top sides of the blocking element and treatment part. Since the top sides of the blocking part and the treatment part are offset with respect to their height a slanted arrangement of the entrance region or opening is realized, which support the realistic arrangement of the entrance region, which needs to be passed to perform a subgingival treatment.

Furthermore, it is conceivable that the blocking part is exchangeable. Preferably, there is a set of exchangeable blocking parts, which distinguish from each other in view of their geometry, dimension and/or material, for example. As a result, it is possible to adapt the training session to the individual requirements by exchanging the blocking part. Preferably, a colour coding is assigned to the different blocking elements such that the trainee is supported to identify the preferred blocking element, which should be used in the next trainings session.

Especially, the entrance region is formed ring shaped and surrounds the treatment part or a body providing or holding the treatment part. The ring might has a circle like shape or an elliptic shape. Preferably, the treatment part and the blocking part are formed by two separate components, which are positioned in a relative arrangement to each other, in particular by attaching the treatment and the blocking part to a basic body, being in particular a further individual part. Alternatively, it is also conceivable that the treatment part and the blocking part are formed as a single piece component, i.e. a component which cannot be subdivided without destroying the component.

Further, the blocking part is connected to the basic body by an adhesive connection, a form fitting connection and/or a force fitting connection, preferably by a reversible connection mechanism. Those connections guarantee that the blocking element is not shifted during the training session, even when the blocking element interacts with the tool. The reversible connection mechanism allows removing the blocking element, for example for cleaning the training device.

In particular, it is provided that the distance between the blocking part and the treatment part is smaller than 0.8 mm, preferably smaller than 0.6 and most preferably smaller than 0.5 mm. As a result, a typical size for the entrance opening is given by the distance between the blocking part and the treatment part, which has to be passed to enter the gum pocket for treating the surface of the teeth.

Preferably, it is provided that the blocking part is formed by a sleeve-like body having a central symmetric axis surrounding the treatment part in a plane perpendicular to the central symmetric axis of the sleeve-like body. As a result, it is possible to model different access opportunities to insert the tool inside the gum pocket and/or to move the tool inside the gum pocket for orientation to optimize the treatment effect. Furthermore, it is possible to easily create different training situations with this model.

Preferably, the blocking part is configured to surround only a single treatment part, for example representing a single tooth. It is also conceivable that the blocking part covers or surrounds at least partially several treatment parts being arranged next to each other, which model a row of teeth.

Preferably, it is provided that along a direction parallel to the central symmetric axis the treatment part protrudes over the blocking part. In other words: The treatment part, in particular its top side, has a distance from the basic body in a direction parallel to the symmetric axis being larger than the distance between the basic body and the topside of the blocking element measured in the same direction. As a result, a very realistic arrangement of the treatment part, to be treated during the subgingival treatment and the blocking part, is realized.

Preferably, it is provided that the treatment part comprises a tapering section, being slanted relative to the central symmetry axis. Thus, it is possible to take into account the course of teeth, especially in the region of the entrance region or opening of a gum pocket and to model the entrance region of the gum pocket.

Preferably, it is provided that the treatment part is formed by a part of a screw-like element or of a screw. In this way, a treatment part is provided which can be easily manufactured and realized. Especially, it allows to easily adapt the distance between the treatment part and the blocking part, especially by screwing the screw being inserted into the basic body. Preferably, the treatment part is formed by an outer side, especially a bottom side of the head section of the screw, which is preferably completely covered with a coating. It is also conceivable that the screw head at least partially has been modified at its surface to model the surface properties of a tooth. In particular, it is of advantage to provide a screw having a standard interface for using a screw driver. This allows an uncomplicated adjustment of the size of the entrance region by screwing it for changing the distance between the top side of the blocking part and the top side of the treatment part, defining the size of the entrance region. For example, the screw is a countersunk head screw.

In particular, it is provided that a threaded region or shaft of the screw models at least partially a root of a tooth and especially provides the limitation of the gum pocket at the side of the tooth, the gum pocket being modelled by the arrangement of the blocking part and the treatment part of the device.

In particular, it is provided that the blocking part is formed such that it establishes a pocket having a pocket depth of at least 8 mm, preferably between 8 mm and 12 mm, more preferably between 9 mm and 10 mm and most preferably about 10 mm. As a result, it is in a realistic way possible to model the size and dimensions of the gum pocket, especially for also taking into account the training possibilities for a rearrangement and reorientation of the inserted tool. Thus, the training device cannot be used only for entering the tool inside the gum pocket but also for arranging and interacting with the tooth in a realistic manner.

It is also conceivable that the training device is arranged inside a model of a mouth of a patient. In such a scenario, even the geometry of the mouth and the location of the training device can be considered.

According to another aspect of the present invention an use of the training device according to the present invention is provided in order to train a subgingival treatment. All specifications and benefits being discussed in context of the device to train the subgingival treatment applies analogously for the use of the training device and vice versa.

Wherever not already described explicitly, individual embodiments or their individual aspects and features can be combined or exchanged with one another without limiting or widening the scope of the described invention, whenever such a combination or exchange is meaningful and in the sense of this invention. Advantages which are described with respect to one embodiment of the present invention are, wherever applicable, also advantageous of other embodiments of the present invention.

### In the drawings:

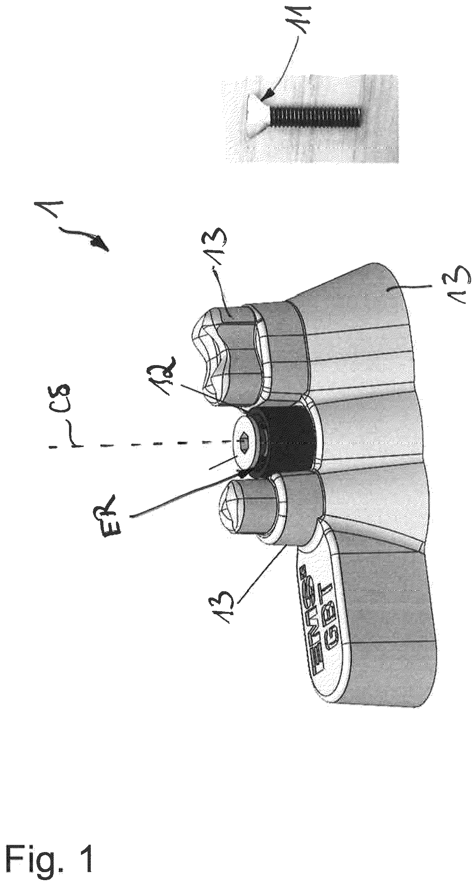

- **Fig. 1**: training device according to a first preferred embodiment of the present invention

In **figure 1** a training device 1 to train a subgingival treatment of a tooth according to a first preferred embodiment is illustrated. In particular, the training device 1 is intended to simulate or to model the removal of calculus and/or biofilms of a subgingival part of the tooth by means of a scaler and/or air polishing device. In particular, it is the intention to train the removal of calculus and/or biofilms, when it is necessary to enter the gum pocket by inserting a scaler tip into the gum pocket and/or a nozzle element of the air polishing device into the gum pocket. Preferably, the intention of the training device 1 is to give the person to be trained a realistic scenario about the subgingival treatment, especially when an air polishing device and/or scaler is used for the treatment. Preferably, the training device 1 comprises a treatment part 11, which is configured to at least partially model a region to be treated in the subgingival treatment, and a blocking part 12, which is configured to complicate an access to the treatment part 11. Especially, it is provided that the treatment part 11 is configured to give a realistic feeling of the surface of a tooth being covered with calculus and/or biofilm while the blocking part 12 is preferably configured such that it is at least partially modeled at least a part of the gum forming the gum pocket. Preferably the blocking part 12 and the treatment part 11 are arranged such that between the treatment part 11 and the blocking part 12, a channel or pocket is formed, which models the gum pocket. Especially the dimension of the gum pocket are modeled or mirrored in the training device. In particular, it is provided that the treatment part 11 and the blocking part 12 are arranged relative to each other such that they model at least an entrance region ER of a gum pocket, wherein the entrance region ER needs to be passed by the tool for the subgingival treatment in the subgingival treatment or to train the subgingival treatment. As a result, a space or distance between the blocking part 12 and the treatment part 11, in particular being assigned to the entrance region, models the region, which has to be passed by either the scaler tip or the nozzle element for performing a subgingival removal of calculus and/or biofilm from the treatment part 11.

In the embodiment illustrated in figure 1 the treatment part 11 is formed at least partially by a head section of a screw and the blocking part 12 is formed by a sleeve-like, in particular cylindrically shaped, body, which surrounds the screw. The screw is illustrated isolated on the right side of figure 1. In particular, the screw head has a conical shape and at least partially a surface of the head section of the screw comprises a coating for modelling the surface properties of a tooth. As a consequence, a realistic feeling is generated for the interaction of the scaler tip and or the nozzle element with the tooth in the region to be treated. Furthermore, it is provided that the blocking part 12 is made from an elastic material such that some deformations, especially elastic deformations, are allowed, when the tool to treat the treatment part contacts the blocking part 12. Preferably, the elasticity of the blocking part 12 is configured such that it models the elastic properties of the tissue forming the gum pocket outside of the tooth. In particular, it is provided that the blocking part 12 and the treatment part 11 are configured such that a distance between the blocking part 12 and the treatment part 11 in the region forming the entrance region ER can be adjusted.

In the embodiment, illustrated in figure 1, the screw is partially inserted into a basic body 13 modelling the jaw of a patient. By screwing the screw, it is possible to adjust a height of the screwing head and therefore the distance between the treatment part 11 and the blocking part 12 in the entrance region ER. The treatment part 11 is preferably completely rotationally symmetric with respect to a central symmetrical line CS. The model of the gum pocket has preferably a depth of at least 8 mm and is formed between a threaded region of the screw and the inner side of the sleeve-like blocking part 12 in the embodiment illustrated in figure 1.

In particular, the basic body comprises a gripping section 15 and/or a fixing section. Such a gripping section 15 and/or fixing section allows to fix the training device 1 in a defined position. It is also conceivable that the gripping section 15 and/or fixing sections has means for fixing the training device to another element such as a suction cap or a clamping element. As a result it is possible to attach the training device 1 to a table for example.

Furthermore, it is provided that the basic body 13, being preferably made from a material more rigid than the blocking part 12, models at least a part of the jaw and/or the tooth or teeth. Preferably the device to train the subgingival treatment includes at least two or three further modeled teeth. As a result, it is possible to train the orientation of the tool during the treatment in a realistic scenario, which also takes into account other teeth which should not be contacted by the ejected powder gas mixture and/or the scaler tip of the scaler. Preferably, the treatment part 11 comprises a tapering section, being slanted relative to the central symmetric axis CS. In figure 1, the tapering section is formed by the conical shaped screw head.

### Reference numerals:

- 1: training device
- 11: treatment part
- 12: blocking part
- 13: basic body
- 15: gripping section
- ER: entrance region
- CS: central symmetric axis

## Claims

1. A training device (1) to train a subgingival treatment of a tooth, comprising
- a treatment part (11) to model at least partially a region to be treated in the subgingival treatment and
- a blocking part (12) to complicate an access to the treatment part (11), wherein the treatment part (11) and the blocking part (12) are arranged such that they model at least an entrance region (ER) of a gum pocket, wherein the entrance region (ER) needs to be passed by a tool for the subgingival treatment in the subgingival treatment or to train the subgingival treatment.

2. The training device (1) according to claim 1, wherein the blocking part (12) is made from an elastic material.

3. The training device (1) according to one of the preceding claims, wherein the treatment part (11) comprises a surface modification and/or a coating to model the surface properties of a tooth.

4. The training device (1) according to one of the preceding claims, wherein the training device (1) comprises a basic body (13) to model at least partially teeth and/or a jaw region.

5. The training device (1) according to claim 4, wherein the basic body (13) is made from a material being more rigid than the material of the blocking part (2).

6. The training device (1) according to one of the preceding claims, wherein in a region modelling the entrance region (ER) a distance between the blocking part (12) and the treatment part (11) is adjustable.

7. The training device (1) according to one of the preceding claims, wherein the distance between the blocking part (12) and the treatment part (11) is smaller than 0.8 mm.

8. The training device (1) according to one of the preceding claims, wherein the blocking part (12) is formed by a sleeve like body having a central symmetric axis (CS), the sleeve like body surrounding the treatment part (11) in a plane perpendicular to the central symmetric axis (CS) of the sleeve like body.

9. The training device (1) according to claim 8, wherein along a direction parallel to the central symmetry axis (CS) the treatment part (11) protrudes over the blocking part (12).

10. The training device (1) according to claim 8 or claim 9, wherein the treatment part (11) comprises a tapering section, being slanted relative to the central symmetry axis (CS).

11. The training device (1) according to one of the preceding claims, wherein the treatment part (11) is formed by a part of a screw-like element or of a screw.

12. The training device (1) according to claims 11, wherein the coating is arranged at a head of the screw-like element or the screw.

13. The training device (1) according to one of the preceding claims, wherein the blocking part (12) is formed such that it establishes a pocket having a pocket depth of at least 8 mm.

14. An use of the training device (1) according to one of the preceding claims to train a subgingival treatment.
